# EUROPEAN PATENT SPECIFICATION

(11) **EP 3 787 154 B1**
(45) Date of publication and mention of the grant of the patent: **14.01.2026**
(21) Application number: 19791549.9
(22) Date of filing: 01.02.2019
(51) Int. Cl.: H02K 1/276, B60L 9/18, B60L 15/08, B60L 50/60, H02K 29/03

(54) **ROTATING ELECTRIC MACHINE, ROTATING ELECTRIC MOTOR DRIVE SYSTEM, AND ELECTRIC VEHICLE**
ELEKTRISCHE DREHMASCHINE, ANTRIEBSSYSTEM FÜR ELEKTRISCHE DREHMASCHINE UND ELEKTROFAHRZEUG
MACHINE ÉLECTRIQUE TOURNANTE, SYSTÈME D'ENTRAÎNEMENT DE MOTEUR ROTATIF, ET VÉHICULE ÉLECTRIQUE

(30) Priority: 25.04.2018 JP 2018083622
(43) Date of publication of application: 03.03.2021
(73) Proprietor: Hitachi Industrial Products, Ltd., Tokyo 101-0021 (JP)
(72) Inventor: ITO, Makoto, Tokyo 100-8280 (JP); TAKAHASHI, Akeshi, Tokyo 100-8280 (JP); SUGIMOTO, Shinji, Tokyo 100-8280 (JP); TAMIYA, Shuichi, Tokyo 100-8280 (JP); KUSHIDA, Takatoshi, Tokyo 100-8280 (JP)
(74) Representative: MERH-IP Matias Erny Reichl Hoffmann Patentanwälte PartG mbB
(86) International application number: PCT/JP2019/003675
(87) International publication number: WO 2019/207889

(56) References cited:
- EP-A2- 2 478 615
- WO-A1-2016/152976
- WO-A2-2007/048211
- JP-A- 2010 098 830
- JP-A- 2017 055 583
- US-A1- 2004 041 483
- US-A1- 2014 184 009
- US-A1- 2015 171 681

## Description

### Technical field

The present invention relates to a rotating electric machine, a rotating electric motor drive system, and an electric vehicle including the rotating electric machine.

### Background Art

Since a high output is required for a drive motor, which is a rotating electric machine used in an electric vehicle such as an electric automobile or an electric railway vehicle, a permanent magnetic motor into which a permanent magnet holding a magnetic energy is incorporated is used. In particular, the drive motor is required to have a wide operating range such as a low-speed large torque and a high-speed low torque, and therefore an interior permanent magnet motor that can satisfy those characteristics is generally used. Further, in addition to those characteristics, the drive motor of the electric vehicle is required to reduce vibration and noise. For a reduction in vibration and a reduction in noise, a reduction in torque pulsation of interior permanent magnet motor becomes a problem.

On the other hand, conventionally, a technique disclosed in Patent Literature 1 has been known. In the technique, a reluctance change portion is provided at a position deviated circumferentially from a q-axis of a rotor core q. In the rotor described above, a phase of a generated torque pulsation in a region having the reluctance change portion is substantially opposite to that in a region having no reluctance change portion. For that reason, the regions having the reluctance change portion and the regions having no reluctance change portion are alternately disposed so that the torque pulsation which is subjected to the overall rotor is reduced. Patent Literature 2 shows a rotor with permanent magnets to be used in synchronous motors, being the format of the external part sinusoidal. The location and the format of the cross section of the permanent magnets are adapted in such a way that the density of the magnetic flux at the air gap, between the stator and the rotor, varies substantially in a sinusoidal way. Additionally, said rotor comprises holes at the interpolar area which, together with the magnet cavities, form bridges to support the shoes serving as barriers to the dispersion of the exciting magnetic flux of the permanent magnets.

### Citation List

### Patent Literature

Patent Literature 1: Japanese Patent Application Laid-Open No. 2010-98830
Patent Literature 2: WO 2007/048211 A2
Patent literature 3: US2015/171681A1

### Summary of Invention

### Technical Problem

In the above conventional art, a leakage magnetic flux of a permanent magnet passes through a d-axis core portion close to an end of the permanent magnet. Further, a q-axis magnetic flux caused by a q-axis current of a motor passes through a d-axis core portion of the permanent magnet. For that reason, the d-axis core portion is magnetically saturated. Upon magnetic saturation of the d-axis core portion, since an effective magnetic pole width of the permanent magnet is changed, the phase of the torque pulsation is changed. Since a range in which the magnetic saturation is performed in the d-axis core portion is different depending on a q-axis current amount, that is, a load state, in the above conventional art, the phase of the torque pulsation in the region having the reluctance change portion is not always opposite to that in the region having no reluctance change portion depending on the load state, which makes it difficult to sufficiently reduce the torque pulsation.

Accordingly, the present invention provides a rotating electric machine, a rotating electric motor drive system, and an electric vehicle having the rotating electric machine, which are capable of reducing torque pulsations in a wide operating range.

### Solution to Problem

In order to solve the above problem, a rotating electric machine according to the present invention includes a stator, and a rotor having a rotor core facing the stator, in which the rotor core has at least one magnet insertion hole per magnetic pole, and includes a d-axis core disposed on an outer circumferential side of the magnet insertion hole, an inner circumferential side core disposed on an inner circumferential side of the magnet insertion hole, and a q-axis core circumferentially adjacent to the d-axis core, the permanent magnet is inserted into the magnet insertion hole, the d-axis core is coupled to the inner circumferential side core by a first bridge portion adjacent to one of both ends of the magnet insertion hole and a second bridge portion adjacent to the other of the both ends, a distance L1 between an end of the d-axis core on the first bridge portion side and a magnetic pole center is larger than a distance L2 between a connection portion between the first bridge portion and the d-axis core and the magnetic pole center, a distance L3 between an end of the d-axis core on the second bridge portion side and the magnetic pole center is larger than a distance L4 between a connection portion between the second bridge portion and the d-axis core and the magnetic pole center, and the rotor core is divided in a plurality of portions each portion having a size of a one-pole pitch, wherein a difference between the distances L1 and L2 of two d-axis cores (41) adjacent to each other are different, and a difference between the distances L3 and L4 of two d-axis cores (41) adjacent to each other are different so that the d-axis cores of adjacent portions have a different cross-sectional shape.

In order to solve the above problem, a rotating electric machine drive system according to the present invention includes a rotating electric machine that drives a load, and a power converter that drives the driving electric machine, and the rotating electric machine is a rotating machine according to the present invention.

In order to solve the above problem, an electric automobile according to the present invention includes a rotating electric machine, a battery, and a power converter that converts a DC power of the battery into an AC power, and supplies the AC power to the rotating electric machine, in which a torque of the rotating electric machine is transmitted to a wheel through a transmission, and the rotating electric machine is a rotating electric machine according to the present invention.

In order to solve the above problem, an electric railway vehicle according to the present invention includes a rotating electric machine, and a wheel driven by the rotating electric machine through a gear, and the rotating electric machine is a rotating electric machine according to the present invention.

### Advantageous Effects of Invention

According to the present invention, the torque pulsation of the rotating electric machine can be reduced in a wide operating range. As a result, in the rotating electric machine drive system, and an electric vehicle including an electric automobile or an electric railway vehicle, even if a load is varied, noise and vibration caused by torque pulsation can be reduced.

The problems, configurations, and effects other than those described above will become apparent from a description of the following examples.

### Brief Description of Drawings

Figure 1 shows an overall configuration of a rotating electric machine according to Example 1.
Figure 2 shows a configuration of a rotor in Figure 1.
Figure 3 shows a configuration of a rotor of a rotating electric machine according to a modification of Example 1 and is not part of the invention.
Figure 4 is a perspective view showing a configuration of a rotor according to Example 1.
Figure 5 is a perspective view showing a configuration of a rotor according to one modification.
Figure 6 is a perspective view showing a configuration of a rotor according to another modification.
Figure 7 shows a configuration of a rotor in a rotating electric machine in a comparative example and is not part of the invention.
Figure 8 shows flows of magnetic flux passing through a peripheral core around a permanent magnet at a low load in the comparative example and Example 1.
Figure 9 shows flows of magnetic flux passing through the peripheral core around the permanent magnet at a high load in the comparative example and Example 1.
Figure 10 is a cross-sectional view of a stator and the rotor on a plane perpendicular to a rotation axis according to Example 1.
Figure 11 shows parameters representing the cross-sectional shape of the rotor core according to Example 1.
Figure 12 shows a schematic configuration of a rotating electric machine drive system according to Example 2.
Figure 13 shows a schematic configuration of an electric automobile according to Example 3.
Figure 14 shows a schematic configuration of an electric railway vehicle according to Example 4. Description of Embodiments

Hereinafter, embodiments of the present invention will be described with the following Examples 1 to 3 with reference to the drawings. In the drawings, those having the same reference numerals represent identical constituent elements or constituent elements having the similar function.

### Example 1

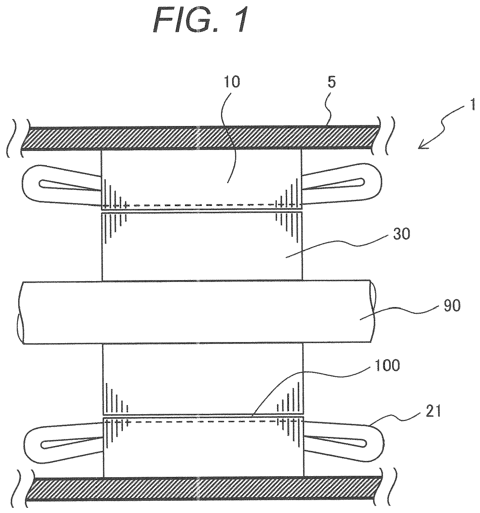

Figure 1 shows an overall configuration of a rotating electric machine according to Example 1 of the present invention. Figure 1 is a cross-sectional view of the rotating electric machine on a plane parallel to a rotation axis of the rotating electric machine. The rotating electric machine according to Example 1 is an interior permanent magnet synchronous motor.

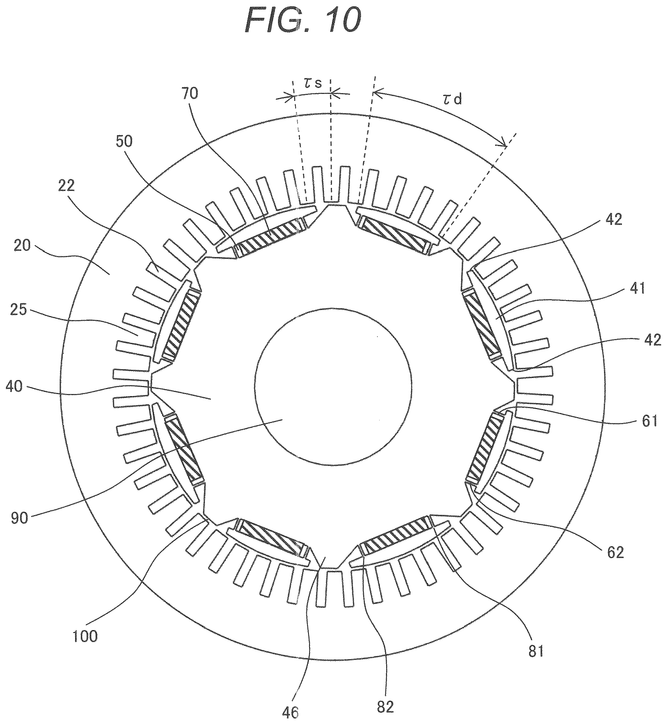

As shown in Figure 1, a rotating electric machine 1 includes a stator 10, a rotor 30 that is rotatably supported on a radially inner side of the stator 10, a shaft 90 that is fixed to the rotor 30, and a frame 5 that covers the stator 10 and the rotor 30. The rotor 30 faces the stator 10 through a gap 100 (air gap). The stator 10 includes a stator winding 21 that is wound on a stator slot ("22" in Figure 10) to be described later.

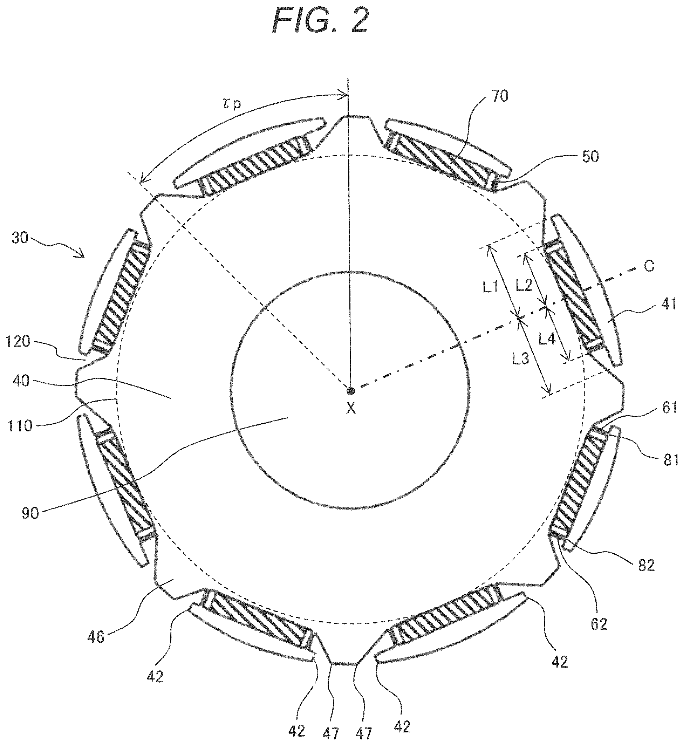

Figure 2 shows a configuration of the rotor 30 in Figure 1. Figure 2 is a cross-sectional view on a plane perpendicular to the axis of rotation.

In Figure 2, the rotor 30 rotates around a rotation axis X. In the following description, unless otherwise specified, the description of "inner circumferential side" and "outer circumferential side" means a side closer to the rotation axis X and a side farther from the rotation axis X, respectively. Further, the description of "radially" means a linear direction perpendicularly intersecting with the rotation axis X, and the description of "circumferential direction" means a rotation direction around the rotation axis X.

As shown in Figure 2, the rotor 30 includes a rotor core made of a magnetic material and a shaft 90 that penetrates through the rotor core 40, which is a rotating shaft of the rotor core 40. Further, the rotor 30 is an even number (eight in Figure 2) of magnetic poles. Each of the magnetic poles has at least one (one in Figure 2) magnet insertion hole 50. A permanent magnet 70 is housed in the magnet insertion hole 50 in order to configure a magnetic pole.

The rotor core 40 includes an inner circumferential side core 110 that is disposed on an inner circumferential side of the magnet insertion hole 50, and a d-axis core 41 that is disposed on an outer circumferential side of the magnet insertion hole 50. A surface of the d-axis core 41 facing the stator is arcuate. Incidentally, the arc is convexed radially toward the rotor. The inner circumferential side core 110 and the d-axis core 41 of each magnetic pole are mechanically coupled to each other by at least two bridge portions constituting the rotor core 40, which are a first bridge portion 61 and a second bridge portion 62 adjacent to both ends of the magnet insertion hole 50 in a width direction. The first bridge portion 61 is located away from the magnetic pole center C along one circumferential direction (counterclockwise in Figure 2), and is adjacent to one end of the magnet insertion hole 50 in the width direction. The second bridge portion 62 is located away from the magnetic pole center C along the other circumferential direction (clockwise in Figure 2), and is adjacent to the other end of the magnet insertion hole 50 in the width direction. The magnet insertion hole 50 is defined by a space bounded by the first bridge portion 61, the second bridge portion 62, the inner circumferential side core 110, and the d-axis core 41.

The permanent magnets 70 are made of a magnetic material such as ferritic, neodymium, or samarium cobalt. Further, the permanent magnet 70 according to Example 1 has a rectangular shape in the cross section of Figure 2, but is not limited to this shape and may have an arc shape. Furthermore, bonded magnets (plastic magnets, rubber magnets, etc.) may be injected into the respective magnet insertion holes 50. Further, the permanent magnet 70 per pole may be divided radially or circumferentially into multiple pieces.

The rotor core 40 is made of a magnetic material, which is preferably a laminate of magnetic steel plates laminated by an electrically insulating material in order to reduce an eddy current loss generated in the rotor core 40. A solid (bulk) magnetic material may be used in order to reduce a material cost and a processing cost. Moreover, a powder magnetic material such as a pressure magnetic core molded under compression may be used, or an amorphous metal or a nanocrystalline material may be used. The rotor core 40 is fixed to the shaft 90 by means such as adhesion, welding, press fitting, and shrink fitting. When the rotor core 40 is made of a solid (bulk) magnetic material, the rotor core 40 and the shaft 90 may be integrally molded.

In Figure 2, the cross-sectional shape of the magnet insertion hole 50 is rectangular, but not limited to the rectangular shape, and if the magnetic insertion hole 50 is a hole such that the inner circumferential side core 110 and the d-axis core 41 of each magnet core portion are spaced from each other along a radial direction, another shape such as a substantially V shape or a substantially arc shape may be applied.

The stator core 20 and the frame 5 are fixed to each other by use of a method such as adhesion, welding, press fitting, and shrink fitting.

In the rotor core 40, d-axis cores 41 adjacent circumferential ends of the q-axis core 46 is provided. That is, each of the q-axis cores 46 is located between two d-axis cores 41 circumferentially adjacent to each other. Substantially V-shaped grooves 120 (gaps) are located circumferentially on both sides of the q-axis core 46, and the d-axis cores 41 and the q-axis cores 46 are separated circumferentially from each other by the grooves 120. In addition, in the groove 120, both ends of the d-axis core are projected circumferentially toward the q-axis core 46 from the positions of the first bridge portion 61 and the second bridge portion 62. In Example 1, lengths of the projected portions are different from each other in the two d-axis cores 41 adjacent to each other through one q-axis core 46.

In Example 1, an outermost diameter of the d-axis core 41 and an outermost diameter of the q-axis core 46 are substantially equivalent to each other. In addition, circumferential thicknesses of the first and second bridge portions 61 and 62 are thinner than the thickness of an end of the circumferential projected portion of the d-axis core 41. In addition, eight permanent magnets 70 configuring the d-axis cores are equivalent to each other in the radial thickness and the circumferential width. Further, the same applies to the radial dimension and the circumferential dimension of the magnet insertion holes 50.

The first bridge portion 61 and the second bridge portion 62 are located radially at both sides of the magnetic pole center C, and spaced from each other. The first bridge portion 61 and the d-axis core 41 are connected to each other at an end of one projected portion of the d-axis core 41 in the circumferential direction, that is, a connection portion 81 located closer to the magnetic pole center C than the d-axis core end 42 in the circumferential direction on the first bridge portion 61 side in the d-axis core 41. In addition, the second bridge portion 62 and the d-axis core 41 are connected to each other at an end of the other projected portion of the d-axis core 41 in the circumferential direction, that is, a connection portion 82 located closer to the magnetic pole center C than the d-axis core end 42 in the circumferential direction on the second bridge portion 62 side in the d-axis core 41. Incidentally, in Example 1, a space between each d-axis core end 42 and each q-axis core 46 is substantially constant.

In each magnetic pole, when a distance between the d-axis core end 42 of the first bridge portion 61 side and the magnetic pole center C is defined as L1, and a distance between the connection portion 81 and the magnetic pole center C is defined as L2, in Example 1, L1 is larger than L2 (L2 < L1). In this example, a distance between one portion and the magnetic pole center C is a length of a perpendicular line from one portion to a virtual center line (one-dot chain line in Figure 2) indicative of the magnetic pole center C, that is, a length of a shortest line segment connecting one portion to the virtual center line (the same applies to "distance" to be described below). Further, when a distance between the d-axis core end 42 of the second bridge portion 62 side and the magnetic pole center C is defined as L3, and a distance between the connection portion 82 and the magnetic pole center C is defined as L4, L3 is larger than L4 (L4 < L3). In Example 1, in one d-axis core, L1 = L3 and L2 = L4. In addition, in two d-axis cores 41 that are located circumferentially on both sides of one q-axis core 46 and are adjacent to each other, the sizes of L1 and L3 are different and the sizes of L2 and L4 are the same.

As shown in Figure 2, the rotor 30 is, so to speak, an aggregation of portions having a substantially fan-shaped cross-section for a one-pole pitch (τp) component. In this example, τp is a value obtained by dividing 360 degrees of one round of the rotor by the number of poles. In Example 1, since the number of poles is eight, τp = 45 degrees. In Example 1, as described above, the distance (L1) between the d-axis core end 42 and the magnetic pole center C in the circumferential direction of the d-axis core 41 is different between the two d-axis cores 41 adjacent to each other. Therefore, the rotor 30 has two types of shapes as the cross-sectional shape for a one-pole pitch, and those two types of shapes are alternately disposed in the circumferential direction. The number of types of the cross-sectional shapes is not limited to two, but multiple types may be applied.

In Example 1, in the two types of the cross-sectional shapes, the shape of the groove 120 is also different. More specifically, a size of an angle (obtuse angle) defined by a substantially flat portion of the outermost circumferential portion of the q-axis core 46, that is, a substantially flat portion on a top of the q-axis core 46 when a direction from the rotation axis X toward the outer circumference of the rotor 30 along the radial direction is a height direction, and an inner wall slope of the groove 120 continuous to an edge of the substantially flat portion is different in the two types of cross-sectional shapes contacting with each other.

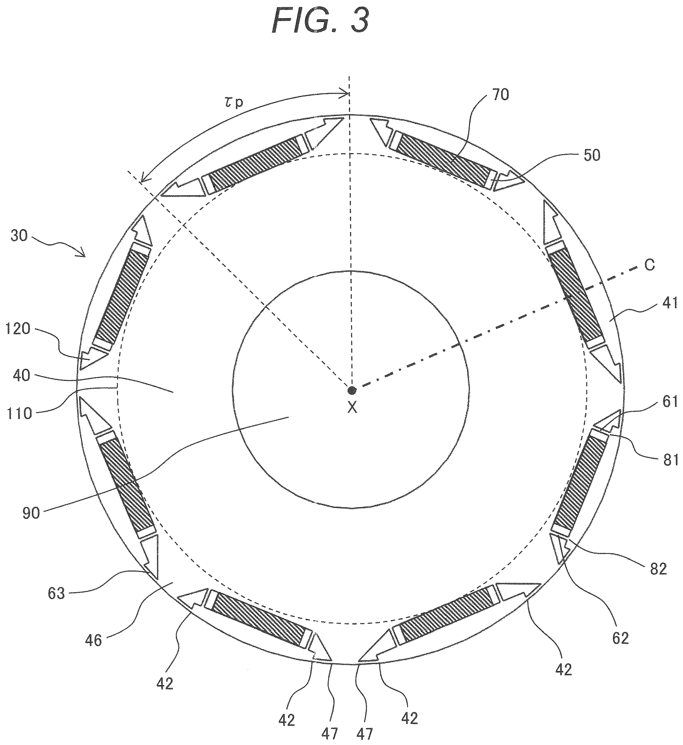

Figure 3 shows a configuration of a rotor of a rotating electric machine according to a modification of Example 1. As in Figure 2, Figure 3 is a cross-sectional view taken along a plane perpendicular to the axis of rotation.

As shown in Figure 3, in the modification, the d-axis core end 42 and the q-axis core end 47 in the circumferential direction of the substantially flat portion at the outermost circumstance of the q-axis core 46 are connected to each other by the bridge portion 63. Incidentally, the bridge portion 63 is in the direction of the axis of rotation along the groove 120 closes an opening of the groove 120 along a direction of the rotation axis. Also, in the modification, the respective facing surface with the stator in the d-axis core 41, the q-axis core 46, and the bridge portion 63 configure a continuous smooth cylindrical surface. As a result, noise (wind noise) and mechanical loss (wind loss) generated during rotation due to uneven portions of the rotor facing the stator can be reduced.

In the modification, the bridge portion 63 is continuous to the d-axis core 41 and the q-axis core 46, and made of the same magnetic material as that of the d-axis core 41 and the q-axis core 46. In addition, a radial thickness of the bridge portion 63 is thinner than a thickness of an end of a circumferential projected portion of the d-axis core 41, for example, is equivalent to the circumferential thickness of the first and second bridge portions 61 and 62.

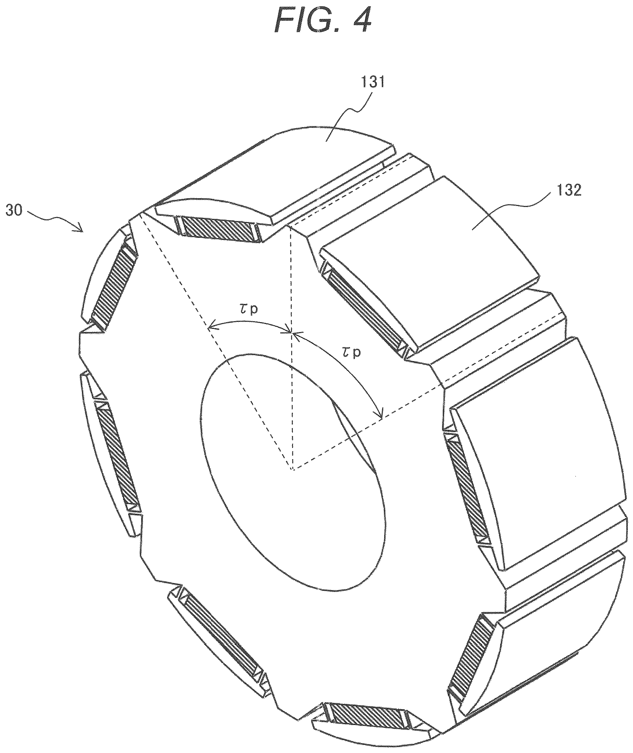

Figure 4 is a perspective view showing a configuration of the rotor according to Example 1.

As shown in Figure 4, the rotor 30 according to Example 1 includes one rotor core. In the rotor 30, as the substantially fan-shaped cross-sectional shape for a one-pole pitch (τp), a first cross-sectional shape 131 and a second cross-sectional shape 132, which are different from each other in the core shape in the vicinity of the permanent magnet, that is, two types of cross-sectional shapes are provided. The first cross-sectional shapes 131 and the second cross-sectional shapes 132 are alternately disposed in the circumferential direction of the rotor 30. Since only one rotor core shown in the figure is provided, the cross-sectional shape of the rotor 30 along the rotation axis is the same at each portion of the rotor 30.

Additionally, in Example 1, since τp = 45 degrees, when the first cross-sectional shapes 131 and the second cross-sectional shapes 132 are alternately disposed one by one as shown in the figure, the rotor 30 has four first cross-sectional shapes 131 and four second cross-sectional shapes 132, that is, the eight substantially fan-shaped cross-sectional shapes in total, which are equal in τp.

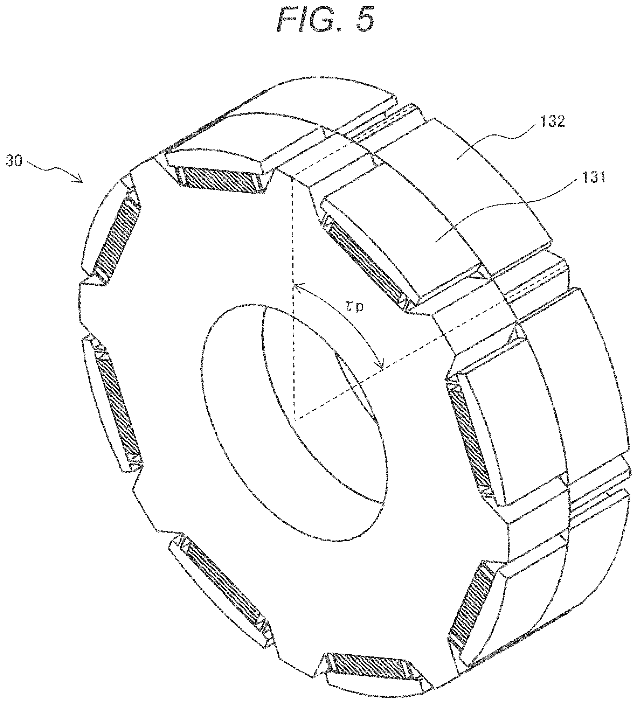

Figure 5 is a perspective view showing a configuration of a rotor in a modification of Example 1.

In the modification of Figure 5, two rotor cores are fixed coaxially to a shaft ("90" in Figure 1) not shown. Accordingly, the rotor 30 includes, so to speak, two rotor portions. In one rotor portion, as the substantially fan-shaped cross-sectional shape for a one-pole pitch (τp (= 45 degrees)), eight first cross-sectional shapes 131 are disposed in the circumferential direction. Further, in the other rotor portion, as the substantially fan-shaped cross-sectional shape for the same one-pole pitch (τp (= 45 degrees)), eight second cross-sectional shapes 132, which are different in the core shape in the vicinity of the permanent magnet from the first cross-sectional shapes 131 are disposed in the circumferential direction. Further, the two rotor portions are disposed so that the overall surfaces of the first cross-sectional shapes 131 in one rotor portion and the second cross-sectional shapes 132 in the other rotor portion overlap with each other.

Therefore, in the rotor 30 according to the present modification, the first cross-sectional shapes 131 and the second cross-sectional shapes 132, which are different from each other in the core shapes (the dimensions of the circumferential projected portions of the d-axis core described above, etc.) in the vicinity of the permanent magnets, are disposed in the rotation axis direction of the rotor 30. Additionally, in one circumferential direction, the same cross-sectional shapes (any one of the first cross-sectional shapes 131 and the second cross-sectional shape 132) are disposed.

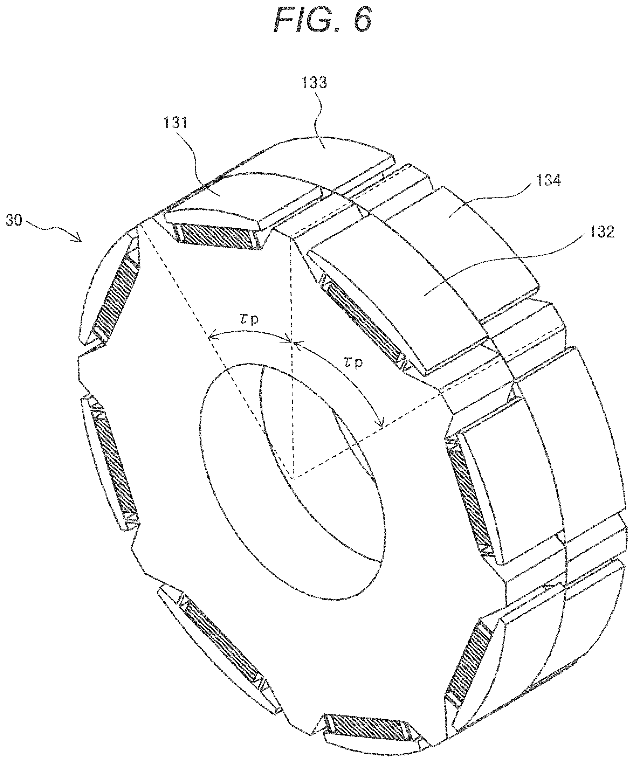

Figure 6 is a perspective view showing a configuration of a rotor in another modification of Example 1.

In the modification of Figure 6, as in the modification of Figure 5, the rotor 30 includes two rotor portions. In one rotor portion, as the substantially fan-shaped cross-sectional shapes for a one-pole pitch (τp), first cross-sectional shapes 131 and second cross-sectional shapes 132, which are different from each other in the core shape in the vicinity of the permanent magnet, that is, two types of cross-sectional shapes are provided. The first cross-sectional shapes 131 and the second cross-sectional shapes 132 are alternately disposed in a circumferential direction of one rotor portion. In addition, in the other rotor portion, as the substantially fan-shaped cross-sectional shapes for a one-pole pitch (τp), third cross-sectional shapes 133 and fourth cross-sectional shapes 134, which are different from each other in the core shape in the vicinity of the permanent magnet, that is, two types of cross-sectional shapes are provided. The third cross-sectional shapes 133 and the fourth cross-sectional shapes 134 are alternately disposed in a circumferential direction of the other rotor portion. Further, the two rotor portions are disposed so that the overall surfaces of the first cross-sectional shapes 131 in one rotor portion and the third cross-sectional shapes 133 in the other rotor portion overlap with each other, and so that the overall surfaces of the second cross-sectional shapes 132 in one rotor portion and the fourth cross-sectional shapes 134 in the other rotor portion overlap with each other.

In this example, the first cross-sectional shapes 131 and the fourth cross-sectional shapes 134 are the same. The second cross sectional shapes 132 and the third cross-sectional shapes 133 are the same. Thus, In the modification of Figure 6, two types of cross-sectional shapes (two types of 131 and 132, or two types of 133 and 134) are disposed, and in the rotation axis direction, two types of cross-sectional shapes (two types of 131 and 133, or two types of 132 and 134) are disposed.

As with the rotors shown in Figures 4 to 6, as the substantially fan-shaped cross-sectional shapes for a one-pole pitch (τp), the multiple types of cross-sectional shapes, which are different from each other in the core shape in the vicinity of the permanent magnet, are disposed in any one or both of the circumferential direction and the rotation axis direction of the rotor. As a result, in any one of those directions, in portions in which the cross-sectional shapes are different from each other, a state of a magnetic flux distribution is different. As a result, torque pulsations in the portions different in the cross-sectional shape from each other cancel each other so that the torque pulsations in the rotating electric machine can be reduced. Further, according to Example 1, as will be described later, the torque pulsations can be reduced in a wide operating range (load range) of the rotating electric machine.

Hereinafter, the operation and effects of Example 1 will be described.

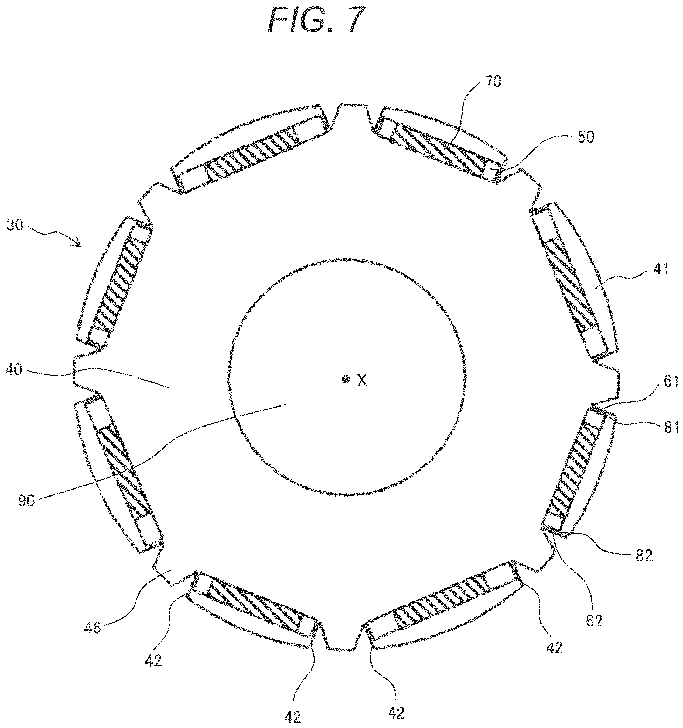

Figure 7 shows a configuration of a rotor in a rotating electric machine according to a comparative example of Example 1. Figure 7 shows a cross-sectional view on a plane perpendicular to a rotation axis of a rotor.

As shown in Figure 7, in the comparative example, positions of d-axis core ends 42, positions of first and second bridge portions 61 and 62, and positions of connection portions 81 and 82 of the d-axis core end 42 and the first and second bridge portions 61 and 62 match each other. In other words, in the comparative example, the d-axis core 41 has no portion projecting from the positions of the connection portions 81 and 82 toward the circumferential direction.

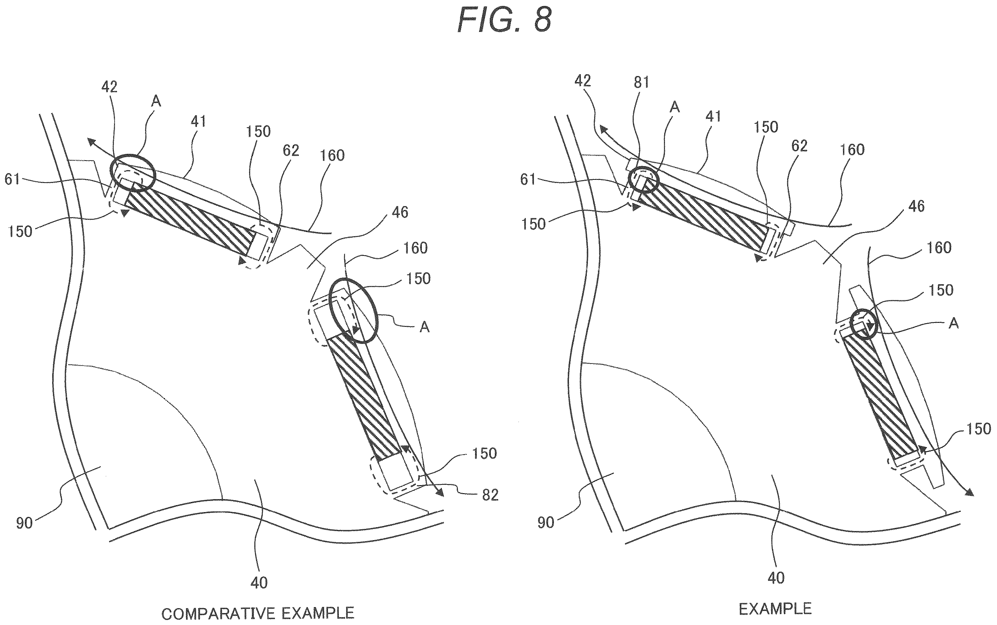

Figure 8 shows flows of a magnetic flux passing through a peripheral core portion around the permanent magnet at a low load in the comparative example and Example 1. Additionally, Figure 8 is a partial cross-sectional view on a plane perpendicular to the rotation axis of the rotor.

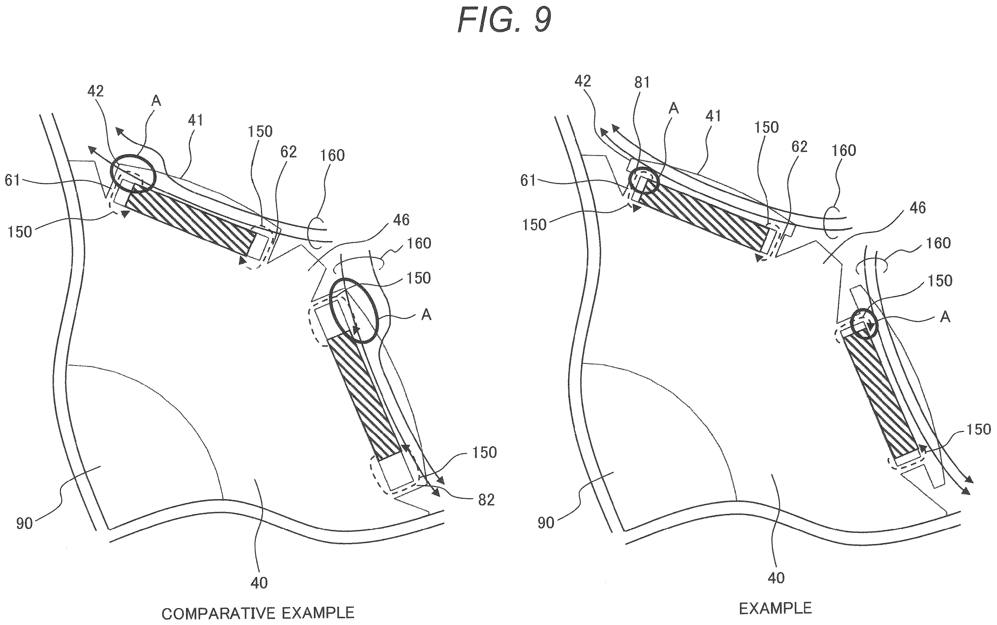

As shown in Figure 8, in the comparative example and the present example, a leakage magnetic flux 150 passes through the d-axis core end 42. The leakage magnetic flux 150 may increase until any one of the bridge portions 61 and 62 and the d-axis core end 42 is magnetically saturated and a relative permeability becomes substantially 1. Accordingly, the bridge portions 61 and 62 and the d-axis core end 42 are both in a high magnetic flux density state. A region A in Figure 8 indicates a high magnetic flux density region (the same applies to Figure 9 to be described later).

As shown in Figure 8, in a low load condition, even if the d-axis core end 42 is in the high magnetic flux density state, since the amount of q-axis magnetic flux 160 is small, the q-axis magnetic flux 160 can pass through the d-axis core end 42 in the comparative example and the present example.

Figure 9 shows flows of the magnetic flux passing through the peripheral core portion around the permanent magnet at a high load in the comparative example and Example 1. Figure 9 is a partial cross-sectional view, which is the same as Figure 8.

As shown in Figure 9, in the comparative example, in the high load state, the d-axis core end 42 on a side where directions of the leakage magnetic flux 150 and the q-axis magnetic flux 160 are aligned is magnetically saturated by superposition of both the leakage magnetic flux 150 and the d-axis magnetic flux 160 in the d-axis core end 42. For that reason, a part of the q-axis magnetic flux 160 cannot pass through the d-axis core end 42, and exits to the stator 10 so as to avoid the high magnetic flux density area A.

In this example, according to the knowledge of the present inventors, a phase of the torque pulsation at each magnetic pole depends on an opening angle τd (refer to Figure 10) in the circumferential direction from one end to the other end of the d-axis core 41, but when the d-axis core end 42 is magnetically saturated, an effective opening angle τd is narrowed so that the occurrence of torque pulsation changes. Therefore, even if the opening angle τd is set so as to reduce the torque pulsation at the low load, the torque pulsation may not be reduced at the high load since the effective opening angle τd is narrowed. In other words, in the comparative example, even if the torque pulsation can be reduced at a certain operating point, it is difficult to reduce the torque pulsation in a wide operating range.

In contrast, in Example 1, since the d-axis core has the projected portions on both ends of the d-axis core, as shown in Figure 9, even in the high load state, a portion through which the leakage magnetic flux 150 passing through the bridge portions 61 and 62 does not pass occurs in the d-axis core end 42. In other words, even if the bridge portions 61 and 62 are magnetically saturated by the leakage magnetic flux 150, the magnetic flux density of the d-axis core end 42 does not increase to the degree that the d-axis core end 42 is magnetically saturated. For that reason, since the q-axis magnetic flux 160 can pass through the d-axis core end 42 even in the high load state as in the low load, the effective opening angle τd is substantially constant not depending on the load state. Therefore, according to the present example, the torque pulsations can be reduced in a wide operating range from the low load to the high load.

Incidentally, in the modification shown in Figure 3 described above, a route of the leakage magnetic flux passing through the bridge portion 63 may occur. However, the bridge portion 63 is farther circumferentially from the end of the permanent magnet 70 than the bridge portions 61 and 62, and the radial thickness of the bridge portion 63 is thinner than the radial thickness of the end of the projected portion, and is the same degree as the circumferential thickness of the bridge portions 61 and 62. For that reason, a magnetic resistance of the route of the leakage magnetic flux passing through the bridge portion 63 is larger than a magnetic resistance of the route of the leakage magnetic flux passing through the bridge portions 61 and 62. As a result, most of the leakage magnetic flux ("150" in Figures 8 and 9) passes through the route of the leakage magnetic flux passing through the bridge portions 61 and 62. Therefore, a state of the flow of the magnetic flux is the same as a state shown in Figures 8 and 9, and the torque pulsations can be reduced in a wide operating range even in Modification 3.

On the other hand, in the present Example 1, no bridge portion 63 is provided, and the d-axis core 41 and the q-axis core 46 are not coupled to each other in the circumferential direction, and are separated in the circumferential direction by a gap of the groove 120. Therefore, the route of the leakage magnetic flux is limited to the route passing through the bridge portions 61 and 62, and the magnetic flux density of the d-axis core end 42 is prevented from increasing by the leakage magnetic flux passing through another route. Therefore, according to the present Example 1, the torque pulsations can be surely reduced in a wide operating range.

Hereinafter, the cross-sectional shape of the rotor according to the present Example 1 will be described in more detail.

Figure 10 is a cross-sectional view of the stator and the rotor in the rotating electric machine on a plane perpendicular to the axis of rotation. For simplicity of the drawing, the stator winding 21 (Figure 1) wound on the stator slot 22 is omitted from illustration. Further, in the rotating electric machine according to the present Example 1, the number of poles of the rotor 30 is 8, and the number of slots of the stator 10 is 48. Additionally, the combination of the number of poles and the number of slots is not limited to eight-pole 48 slots as in the present Example 1, and can be appropriately set.

The torque of each magnetic pole at a certain moment depends on a positional relationship between the d-axis core end 42 and the stator teeth 25. For example, the slot combination affects the order of the torque pulsation component, and as shown in Figure 10, in the case of the eight-pole 48-slots, a 12-order component is a main torque pulsation component.

The phase of the torque pulsation components depends on the positional relationship of the d-axis core end 42 and the stator teeth 25. When the positional relationship between the d-axis core end 42 and the stator teeth 25 facing the d-axis core end 42 is the same at each magnetic pole, the phases of the torque pulsations at each magnetic pole are almost the same. For example, as shown in Figure 10, when a slot pitch angle of the stator 10 is defined as τs, when a difference of the circumferential opening angles τd from one end to the other end of the d-axis core 41 is 2τs in two types of cross-sectional shapes (131 and 132 in Figure 4) different in shape, the phases of the torque pulsations at each magnetic pole substantially match each other.

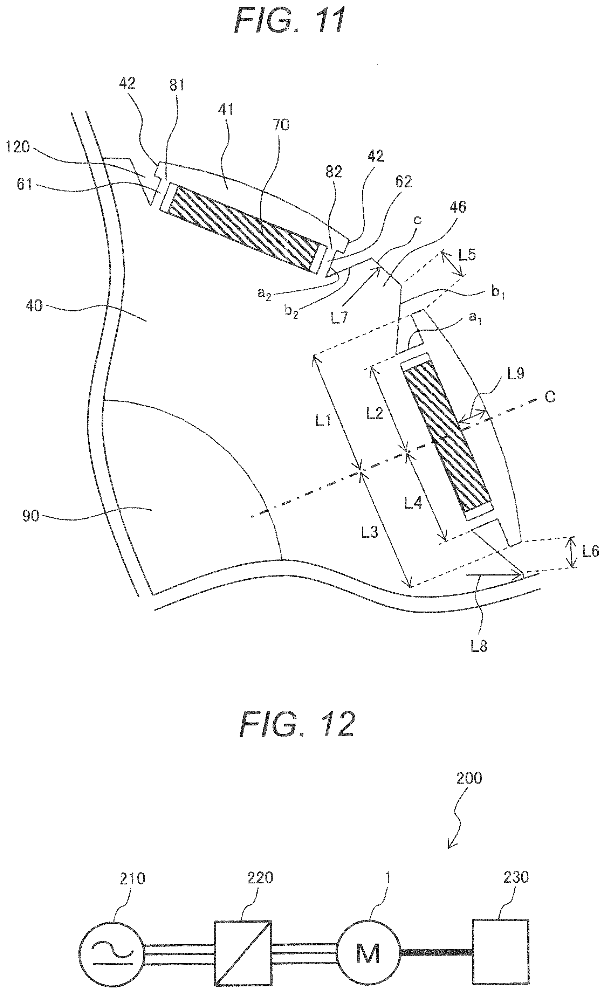

Incidentally, in Figure 10, in each magnetic pole, when a distance between the circumferential d-axis core end 42 on the first bridge portion 61 side of the d-axis core 41 and a magnetic pole center (C in Figure 2) is defined as L1, and a distance between the circumferential d-axis core end 42 on the second bridge portion 62 side of the d-axis core 41 and the magnetic pole center is defined as L3, L1 = L3 is satisfied (refer to Figure 11 to be described later). On the contrary, if L1 ≠ L3 is satisfied, when a difference in τd in the two types of cross-sectional shape is τs, and a position at which the d-axis core end 42 and the stator teeth 25 face each other is the same, the phases of the torque pulsations at each magnetic pole substantially match each other.

Accordingly, in the multiple types (two types in the present Example 1) different in shape, when a difference between a maximum value and a minimum value of at least τd is reduced, the phase of the torque pulsation caused by the slot combination at each magnetic pole can be shifted, and the torque pulsations can be reduced.

Figure 11 shows parameters (L1 to L9) representing the cross-sectional shape of the rotor core in the present Example 1. Figure 11 is a partial cross-sectional view of the rotor in a plane perpendicular to the axis of rotation.

L1 is a distance between the circumferential d-axis core end 42 on the first bridge portion 61 side of the d-axis core 41 and the magnetic pole center C.

L2 is a distance between the connection portion 81 and the magnetic pole center C.

L3 is a distance between the circumferential d-axis core end 42 on the second bridge portion 62 side of the d-axis core 41 and the magnetic pole center C.

L4 is a distance between the connection portion 82 and the magnetic pole center C.

L5 is a circumferential width of an opening of the groove 120 (gap) on the first bridge portion 61 side. In other words, L5 is a distance between the circumferential termination of the d-axis core 41 and the edge of the radially outermost circumferential portion c (flat portion) of the q-axis core 46 on the first bridge portion 61 side.

L6 is a circumferential width of an opening of the groove 120 (gap) on the second bridge portion 62 side. In other words, L6 is a distance between the circumferential termination of the d-axis core 41 and the edge of the radially outermost circumferential portion c of the q-axis core 46 on the second bridge portion 62 side.

L7 is a radial distance of the q-axis core 46 on the first bridge portion 62 side from a rotation axis X of the radial outermost circumferential portion c.

L8 is a radial distance of the q-axis core 46 on the second bridge portion 62 side from the rotation axis X of the radial outermost circumferential portion c.

L9 is a distance between the outer circumferential surface of the d-axis core 41 and the outer circumferential surface of the permanent magnet 70 on the magnetic pole center C.

In the present Example 1, since the rotor core has the q-axis core 46, not only a magnet torque but also a reluctance torque occurs. As described above, the circumferential opening angle τd from one end to the other end of the d-axis core end 42 is a parameter related to the phase of the torque pulsation by the magnet torque. τd changes according to L1 to L4. Therefore, in the multiple types (two types in Example 1) of cross-sectional shapes, any one or some of L1 to L4 are made different so that the phase of the torque pulsation by the magnet torque can be made different. Additionally, in the present Example 1, L1 = L3 and L2 = L4 (L1 > L2, L3 > L4) are satisfied in each magnetic portion, and L1 and L3 are made different in the two types of cross-sectional shapes (131 and 132 in Figure 4).

Since a distribution state of the q-axis magnetic flux changes by changing any one or some of L5 to L8, the phase of the reluctance torque of each magnetic pole can be made different. As a result, the pulsation of the reluctance torque can be reduced.

when L9 is changed, both of the magnetic flux amount and the q-axis inductance of the permanent magnet 70 change so that the amounts of the magnet torque and the reluctance torque can be changed. For that reason, when L9 is made different in each cross-sectional shape, a ratio of the pulsation component of the magnet torque to the pulsation component of the reluctance torque in each magnet torque can be adjusted. Therefore, the phase of each torque pulsation of the magnet torque and the reluctance torque is shifted by L1 to L8, and the size of each torque pulsation is made equivalent by L9 so that both the pulsation components can cancel each other, and the torque pulsations of the overall rotor can be reduced.

L1 to L9 may be made different in the circumferential direction of the rotor as in the present Example 1, or as in the modifications of Figures 5 and 6, L1 to L9 may be made different in the rotation axis direction, or both of the circumferential direction and the rotation axis direction.

In the present Example 1, L1 = L3, L2 = L4 and L1 > L2, L3 > L4 are satisfied at each magnetic pole. That is, both ends of the d- axis core project from the positions of the first bridge portion 61 and the second bridge portion 62 in the circumferential direction toward the q-axis core 46. As a result, as described above (Figures 8 and 9), the magnetic saturation in the circumferential d-axis core end 42 of the d-axis core 41 is prevented.

Further, in the present Example 1, in the two types of cross-sectional shapes, L1 and L3 are different, and L2, L4, and L5 to L9 are equivalent. Accordingly, the torque pulsation of the magnet torque is reduced. Additionally, since the pole pitch angle τp (Figure 2) is equivalent in the two types of cross-sectional shapes, L5 and L6 are equivalent, but in the two types of cross-sectional shapes, the shape of the groove 120 (gap) is different. More specifically, as shown in Figure 11, in the two types of cross-sectional shapes adjacent to each other, a size of an angle defined by an inner wall slope b1 of the groove 120 continuous to an edge of the flat portion c of the outermost circumferential portion of the q-axis core 46 and an outer wall surface a1 of the bridge portion (61, 62) is different from a size of an angle defined by an inner wall slope 2b and an outer wall surface a2 in the same manner. For that reason, in the two types of cross-sectional shapes, since the distribution state of the q-axis magnetic flux is different, the phase of the torque pulsation of the reluctance torque is different. As a result, the torque pulsation of the reluctance torque is reduced.

Incidentally, as shown in Figure 11, circumferential short sides of the permanent magnet 70 in a rectangular cross-section and outer wall surfaces a1 and a2 of the first and second bridge portions 61 and 62 are disposed in parallel in the radial direction. Further, as shown in Figure 11, the groove 120 has a substantially V-shaped cross-section. For that reason, an angle defined by a1 and b1 and an angle defined by a2 and b2 are both acute angles. As a result, a reluctance torque with less pulsation can be obtained without increasing the q-axis core 46.

Further, in the present Example 1, since both ends of the d-axis core are projected toward the q-axis core 46 in the circumferential direction from the first bridge portion 61 and the second bridge portion 62, the magnetic flux from the permanent magnet 70 toward the stator spread in the circumferential direction in each magnetic pole. Therefore, a change in the magnetic flux density in the d-axis core end 42 in the circumferential direction of the d-axis core 41 is alleviated. Further, the pulsation components are cancelled by the magnetic poles of the different cross-sectional shapes so that a cogging torque can be reduced, and a no-load induced electromotive force can be sinusoidal. When no-load induced electromotive force is sinusoidal, a harmonic loss caused by a structure of the rotating electric machine such as a slot combination can be reduced, and the efficiency of the rotating electric machine is improved.

In addition, a description of each cross-sectional section has been omitted, but in the present Example 1, a magnetic barrier space is provided between the circumferential end of the permanent magnet 70 and the first and second bridge portions 61 and 62. This makes it possible to reduce the cogging torque. The magnetic barrier space portion may be a space portion or may be a filling portion made of a non-magnetic material such as resin.

As described above, according to the rotating electric machine of the present Example 1, the torque pulsation can be reduced in a wide operating range from a low load to a high load.

### Example 2

Figure 12 shows a schematic configuration of a rotating electric machine drive system according to Example 2 of the present invention.

In the present Example 2, a rotating electric machine in Example 1 described above is applied as the rotating electric machine 1 in Figure 12.

In a rotating electric machine drive system 200 of Figure 12, a power for driving the rotating electric machine 1 is supplied from a power supply 210 through a power converter 220 formed by an inverter, a converter, or the like. In this case, output control of the rotating electric machine 1 according to a load 230 driven by the rotating electric machine 1 can be performed by the power converter 220.

In the conventional rotating electric machine and the comparative examples described above, there is a concern that even if the torque pulsation can be reduced at a certain operating point, the torque pulsation cannot be reduced at other operating points, and therefore a large torque pulsation occurs when a load is varied. When the torque pulsation occurs, in general, control for allowing a current cancelling the torque pulsation to flow is executed in the torque control. Since the torque pulsation is generated as a high-order pulsation component, the high-response power converter 220 is required for allowing the control to follow the torque pulsation, and the cost of the power converter 220 increases. Further, since a harmonic current for reducing the torque pulsation is injected, a switching loss in the power converter 220 and a harmonic loss occurring in the rotating electric machine 1 increase, which leads to a deterioration in the system efficiency. Even in speed control, when a moment of inertia of the rotor is small, the torque pulsation causes a speed variation, and therefore as in the torque control, the high-response power converter 220 is required, and the system efficiency is lowered.

In contrast, in the present Example 2, since the rotating electric machine of Example 1 is applied, the rotating electric machine 1 can reduce the torque pulsation in a wide operating range, and the torque pulsation of the rotating electric machine 1 can be reduced even when a load is varied. For that reason, even in any control system of the torque control and the speed control, no high-response power converter 220 is required. Further, since the switching loss in the power converter 220 and the harmonic loss occurring in the rotating electric machine 1 can be reduced, the system efficiency of the rotating electric machine drive system 200 is improved. Further, even in the position control, a deterioration in the controllability by the torque pulsation does not occur, and high-precision position control can be performed on various loads. In addition, the vibration and noise caused by the torque pulsation can be reduced.

### Example 3

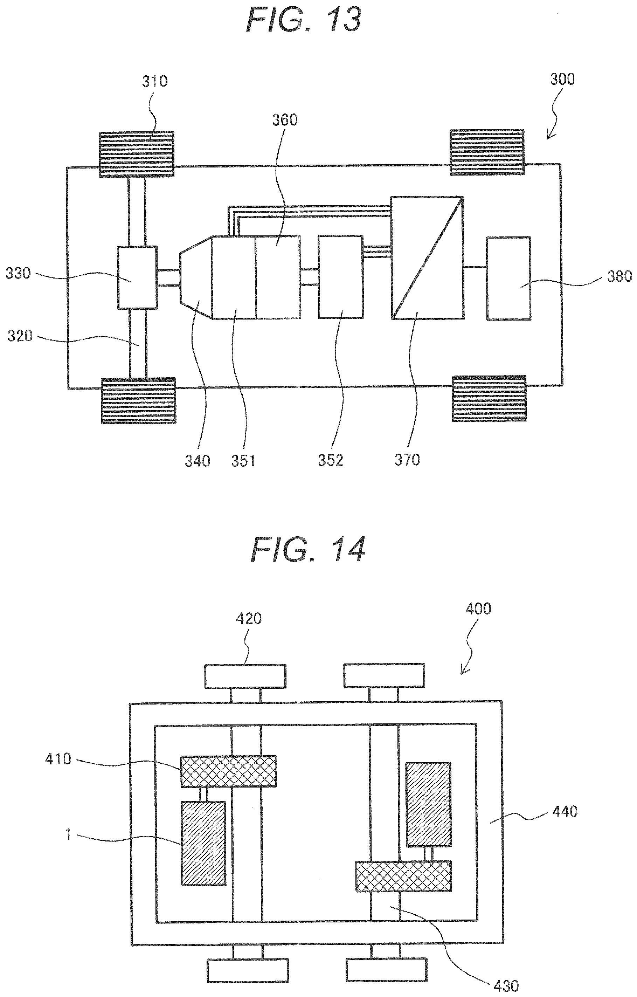

Figure 13 shows a schematic configuration of an electric automobile according to Example 3 of the present invention.

In the present Example 3, a rotating electric machine of Example 1 described above is applied as rotating electric machines 351 and 352 in Figure 13.

As shown in Figure 13, an electric automobile 300 is equipped with an engine 360, the rotating electric machines 351 and 352, and a battery 380.

When the rotating electric machines 351 and 352 are driven, the battery 380 supplies a DC power to a power converter 370 (inverter) for driving the rotating electric machines 351 and 352. The power converter 370 converts the DC power from the battery 380 into an AC power, and supplies the AC power to the rotating electric machines 351 and 352.

Further, during regenerative traveling, the rotating electric machines 351 and 352 generate the AC power according to a kinetic energy of the vehicle and supply the AC power to the power converter 370. The power converter 370 convers the AC power from the rotating electric machines 351 and 352 into a DC power, and supplies the DC power to the battery 380.

A rotation torque by an engine 360 and the rotating electric machines 351 and 352 are transmitted to wheels 310 through a transmission 340, a differential gear 330, and an axle 320.

Generally, an automobile requires a wide operating range such as a low-speed large torque at hill start, a high-speed small torque at highway, a medium-speed medium torque at streets, and so on. In the wide operating range described above, the torque pulsation is reduced in the rotating electric machines 351 and 352. For that reason, since noise and vibration caused by the torque pulsations of the rotating electric machines 351 and 352 can be reduced in the wide operating range, the riding comfort of the electric automobile 300 is improved.

In addition, with a reduction in the torque pulsations of the rotating electric machines 351 and 352, a mechanical impact to be given to the transmission 340 and the differential gear 330 can be relaxed. For that reason, improved safety and a long lifetime of the electric automobile 300 can be performed. In addition, the harmonic current injection for torque pulsation reduction is unnecessary, and the system efficiency of the electric automobile 300 is improved so that a cruising distance of the electric automobile 300 can be prolonged.

Even in the electric automobile having no engine 360 and driven by only a power of the rotating electric machine, the rotating electric machine according to Example 1 is applied to obtain the same effects as those of Example 3.

### Example 4

Figure 14 shows a schematic configuration of an electric railway vehicle according to Example 4 of the present invention.

In the present Example 4, the rotating electric machine according to Example 1 described above is applied as rotating electric machines 1.

As shown in Figure 14, an electric railway vehicle 400 includes gears 410, wheels 420, and a carriage having axles 430 and the rotating electric machines 1. The rotating electric machines 1 drive the wheels 420 connected to the axles 430 through the gears 410. The rotating electric machines 1 are driven by a power converter not shown. In the present Example 4, the carriage 440 has two rotating electric machines 1, but is not limited to the above configuration, and may have one or three or more rotating electric machines 1.

In general, the railway vehicles are required to have torque characteristics in a wide speed range from the start to the maximum speed driving, and also required to have a wide torque range according to an occupancy rate. In the wide operating range described above, the torque pulsations are reduced in the rotating electric machine 1. For that reason, since the noise and vibration caused by the torque pulsation of the rotating electric machine 1 can be always reduced regardless of the occupancy rate, the riding comfort of the electric railway vehicle 400 is improved. In addition, since the torque pulsation of the rotating electric machine 1 is reduced, the mechanical impact to be given to the gears 410 is alleviated. For that reason, the improved safety and the long lifetime of the electric railway vehicle 400 can be performed. In addition, the harmonic current injection for torque pulsation reduction is unnecessary, and the system efficiency of the electric railway vehicle 400 is improved.

### Reference Signs List

1 ... rotating electric machine, 5 ... frame, 10 ... stator, 20 ... stator core, 21 ... stator winding, 22 ... stator slot, 25 ... stator teeth, 30 ... rotor, 40 ... rotor core, 41 ... d-axis core, 42 ... d-axis core end, 46 ... q-axis core, 47 ... q-axis core end, 50 ... magnet insertion hole, 61 ... first bridge portion, 62 ... second bridge portion, 63 ... bridge portion, 70 ... permanent magnet, 81, 82 ... connection portions, 90 ... shaft, 100 ... gap, 110 ... inner circumferential side core, 120 ... groove, 131, 132, 133, and 134 ... cross-sectional shapes, 150 ... leakage magnetic flux, 160 ... q-axis magnetic flux, 200 ... rotating electric machine drive system, 210 ... power supply, 220 ... power converter, 230 ... load, 300 ... electric automobile, 310 ... wheel, 320 ... axle, 330 ... differential gear, 340 ... transmission, 351, 352 ... rotating electric machines, 360 ... engine, 370 ... power converter, 380 ... battery, 400 ... electric railway vehicle, 410 ... gear, 420 ... wheel, 430 ... axle, and 440 ... carriage

## Claims

1. A rotating electric machine (1) comprising:
a stator (10); and
a rotor (30) having a rotor core (40) facing the stator (10),
wherein the rotor core (40) has at least one magnet insertion hole (50) per magnetic pole, and includes a d-axis core (41) disposed on an outer circumferential side of the magnet insertion hole (50), an inner circumferential side core (110) disposed on an inner circumferential side of the magnet insertion hole (50), and a q-axis core (46) circumferentially adjacent to the d-axis core (41),
a permanent magnet (70) is inserted into the magnet insertion hole (50),
the d-axis core (41) is coupled to the inner circumferential side core (110) by a first bridge portion (61) adjacent to one of both ends of the magnet insertion hole (50) and a second bridge portion (62) adjacent to the other of the both ends,
a distance L1 between an end of the d-axis core (41) on the first bridge portion side and a magnetic pole center (C) is larger than a distance L2 between a connection portion (81) between the first bridge portion (61) and the d-axis core (41) and the magnetic pole center (C),
a distance L3 between an end of the d-axis core (41) on the second bridge portion side and the magnetic pole center (C) is larger than a distance L4 between a connection portion (82) between the second bridge portion (62) and the d-axis core (41) and the magnetic pole center (C), and
the rotor core (40) is divided into a plurality of portions each portion having a size of a one-pole pitch, wherein a difference between the distances L1 and L2 of two d-axis cores (41) adjacent to each other are different, and a difference between the distances L3 and L4 of two d-axis cores (41) adjacent to each other are different so that the d-axis cores (41) of adjacent portions have a different cross-sectional shape.

2. The rotating electric machine (1) according to claim 1,
wherein the adjacent portions having different cross-sectional shapes of the d-axis cores (41) are located in a circumferential direction or a rotation axis direction (X) of the rotor (30), or in both of the circumferential direction and the rotation axis direction (X).

3. The rotating electric machine (1) according to claim 1,
wherein the d-axis core (41) has projecting portions that project circumferentially from the connection portion (81) of the first bridge portion (61) and the d-axis core (41) and the connection portion (82) of the second bridge portion (62) and the d-axis core (41).

4. The rotating electric machine (1) according to claim 1,
wherein a difference between a maximum value and a minimum value of a circumferential opening angle τd from the end of the d-axis core (41) on the first bridge side and the end on the second bridge side in the plurality of types of cross-sectional shapes is smaller than a slot pitch angle τs of the stator (10).

5. The rotating electric machine (1) according to claim 1,
wherein a groove (120) is located between the d-axis core (41) and the q-axis core (46).

6. The rotating electric machine (1) according to claim 5,
wherein the groove (120) is substantially V-shaped.

7. The rotating electric machine (1) according to claim 1,
wherein any one of the L1, the L2, the L3, the L4, a distance L5 between the end of the d-axis core (41) on the first bridge portion side and a radially outermost circumstance of the q-axis core, a distance L6 between the end of the d-axis core (41) on the second bridge portion side and the radially outermost circumstance of the q-axis core, a distance L7 of the radially outermost circumstance of the q-axis core (46) on the first bridge portion side from a rotation axis, a distance L8 of the radially outermost circumstance of the q-axis core (46) on the second bridge portion side from the rotation axis, and a distance L9 between an outer circumferential surface of the d-axis core (41) and an outer circumferential surface of the permanent magnet (70) on the magnetic pole center, is different in the plurality of types of cross-sectional shapes.

8. The rotating electric machine (1) according to claim 7,
wherein any one of the L1 to the L4 is different in the plurality of types of cross-sectional shapes.

9. The rotating electric machine (1) according to claim 7,
wherein any one of the L5 to the L8 is different in the plurality of types of cross-sectional shapes.

10. The rotating electric machine (1) according to claim 7,
wherein the L9 is different in the plurality of types of cross-sectional shapes.

11. The rotating electric machine (1) according to claim 5, further comprising a bridge portion that couples the d-axis core (41) to the q-axis core (46) and closes an opening of the groove (120).

12. A rotating electric machine drive system comprising:
a rotating electric machine (1) that drives a load; and
a power converter that drives the rotating electric machine (1),
wherein the rotating electric machine (1) is the rotating electric machine (1) according to claim 1.

13. An electric automobile comprising:
A rotating electric machine (1);
a battery; and
a power converter that converts a DC power of the battery into an AC power, and supplies the AC power to the rotating electric machine (1), in which a torque of the rotating electric machine (1) is transmitted to a wheel through a transmission,
wherein the rotating electric machine (1) is the rotating electric machine according to claim 1.

14. An electric railway vehicle including a carriage comprising:
a rotating electric machine (1); and
a wheel driven by the rotating electric machine (1) through a gear,
wherein the rotating electric machine (1) is a rotating electric machine (1) according to claim 1.

## Patentansprüche

1. Rotierende elektrische Maschine (1), die Folgendes umfasst:
einen Stator (10); und
einen Rotor (30) mit einem Rotorkern (40), der dem Stator (10) zugewandt ist,
wobei der Rotorkern (40) mindestens ein Magneteinsatzloch (50) pro Magnetpol aufweist und einen d-Achsen-Kern (41), der auf einer Außenumfangsseite des Magneteinsatzlochs (50) angeordnet ist, einen innenumfangsseitigen Kern (110), der auf einer Innenumfangsseite des Magneteinsatzlochs (50) angeordnet ist, und einen q-Achsen-Kern (46), der in Umfangsrichtung zum d-Achsen-Kern (41) benachbart ist, enthält,
ein Permanentmagnet (70) in das Magneteinsatzloch (50) eingesetzt ist,
der d-Achsen-Kern (41) durch einen ersten Brückenabschnitt (61), der zu einem der beiden Enden des Magneteinsatzlochs (50) benachbart ist, und einen zweiten Brückenabschnitt (62), der zu dem anderen der beiden Enden benachbart ist, mit dem innenumfangsseitigen Kern (110) gekoppelt ist,
ein Abstand L1 zwischen einem Ende des d-Achsen-Kerns (41) auf der Seite des ersten Brückenabschnitts und einem Magnetpolzentrum (C) größer als ein Abstand L2 zwischen einem Verbindungsabschnitt (81) zwischen dem ersten Brückenabschnitt (61) und dem d-Achsen-Kern (41) und dem Magnetpolzentrum (C) ist,
ein Abstand L3 zwischen einem Ende des d-Achsenkerns (41) auf der Seite des zweiten Brückenabschnitts und dem Magnetpolzentrum (C) größer als ein Abstand L4 zwischen einem Verbindungsabschnitt (82) zwischen dem zweiten Brückenabschnitt (62) und dem d-Achsen-Kern (41) und dem Magnetpolzentrum (C) ist, und
der Rotorkern (40) in mehrere Abschnitte unterteilt ist, wobei jeder Abschnitt eine Größe einer einpoligen Teilung aufweist, wobei eine Differenz zwischen den Abständen L1 und L2 von zwei zueinander benachbarten d-Achsen-Kernen (41) unterschiedlich ist und eine Differenz zwischen den Abständen L3 und L4 von zwei zueinander benachbarten d-Achsen-Kernen (41) unterschiedlich ist, derart, dass die d-Achsen-Kerne (41) von benachbarten Abschnitten eine unterschiedliche Querschnittsform aufweisen.

2. Rotierende elektrische Maschine (1) nach Anspruch 1,
wobei die benachbarten Abschnitte mit unterschiedlichen Querschnittsformen der d-Achsen-Kerne (41) in einer Umfangsrichtung oder einer Drehachsenrichtung (X) des Rotors (30) oder sowohl in der Umfangsrichtung als auch in der Drehachsenrichtung (X) angeordnet sind.

3. Rotierende elektrische Maschine (1) nach Anspruch 1,
wobei der d-Achsen-Kern (41) vorstehende Abschnitte aufweist, die in Umfangsrichtung vom Verbindungsabschnitt (81) des ersten Brückenabschnitts (61) und des d-Achsen-Kerns (41) und vom Verbindungsabschnitt (82) des zweiten Brückenabschnitts (62) und des d-Achsen-Kerns (41) vorstehen.

4. Rotierende elektrische Maschine (1) nach Anspruch 1,
wobei eine Differenz zwischen einem Maximalwert und einem Minimalwert eines Umfangsöffnungswinkels τd von dem Ende des d-Achsen-Kerns (41) auf der Seite der ersten Brücke und dem Ende auf der Seite der zweiten Brücke bei den mehreren Arten von Querschnittsformen kleiner als ein Schlitzteilungswinkel τs des Stators (10) ist.

5. Rotierende elektrische Maschine (1) nach Anspruch 1,
wobei zwischen dem d-Achsen-Kern (41) und dem q-Achsen-Kern (46) eine Fuge (120) angeordnet ist.

6. Rotierende elektrische Maschine (1) nach Anspruch 5,
wobei die Fuge (120) im Wesentlichen V-förmig ist.

7. Rotierende elektrische Maschine (1) nach Anspruch 1,
wobei irgendeiner des L1, des L2, des L3, des L4, eines Abstands L5 zwischen dem Ende des d-Achsen-Kerns (41) auf der Seite des ersten Brückenabschnitts und einem radial äußersten Umfang des q-Achsen-Kerns, eines Abstands L6 zwischen dem Ende des d-Achsen-Kerns (41) auf der Seite des zweiten Brückenabschnitts und dem radial äußersten Umfang des q-Achsen-Kerns, eines Abstands L7 des radial äußersten Umfangs des q-Achsen-Kerns (46) auf der Seite des ersten Brückenabschnitts von einer Drehachse, eines Abstands L8 des radial äußersten Umfangs des q-Achsen-Kerns (46) auf der Seite des zweiten Brückenabschnitts von der Drehachse und eines Abstands L9 zwischen einer Außenumfangsfläche des d-Achsen-Kerns (41) und einer Außenumfangsfläche des Permanentmagneten (70) auf dem Magnetpolzentrum bei den mehreren Arten von Querschnittsformen unterschiedlich ist.

8. Rotierende elektrische Maschine (1) nach Anspruch 7,
wobei irgendeiner von L1 bis L4 bei den mehreren Arten von Querschnittsformen unterschiedlich ist.

9. Rotierende elektrische Maschine (1) nach Anspruch 7,
wobei irgendeiner von L5 bis L8 bei den mehreren Arten von Querschnittsformen unterschiedlich ist.

10. Rotierende elektrische Maschine (1) nach Anspruch 7,
wobei L9 bei den mehreren Arten von Querschnittsformen unterschiedlich ist.

11. Rotierende elektrische Maschine (1) nach Anspruch 5, die ferner einen Brückenabschnitt umfasst, der den d-Achsen-Kern (41) mit dem q-Achsen-Kern (46) koppelt und eine Öffnung der Fuge (120) verschließt.

12. Antriebssystem mit einer rotierenden elektrischen Maschine, das Folgendes umfasst:
eine rotierende elektrische Maschine (1), die eine Last antreibt; und
einen Leistungsumsetzer, der die rotierende elektrische Maschine (1) antreibt,
wobei die rotierende elektrische Maschine (1) die rotierende elektrische Maschine (1) nach Anspruch 1 ist.

13. Elektrokraftfahrzeug, das Folgendes umfasst:
eine rotierende elektrische Maschine (1);
eine Batterie; und
einen Leistungsumsetzer, der eine Gleichstromleistung der Batterie in eine Wechselstromleistung umsetzt und die Wechselstromleistung der rotierenden elektrischen Maschine (1) zuführt, wobei ein Drehmoment der rotierenden elektrischen Maschine (1) durch ein Getriebe zu einem Rad übertragen wird,
wobei die rotierende elektrische Maschine (1) die rotierende elektrische Maschine nach Anspruch 1 ist.

14. Elektrisches Schienenfahrzeug mit einem Fahrgestell, das Folgendes umfasst:
eine rotierende elektrische Maschine (1); und
ein Rad, das durch die rotierende elektrische Maschine (1) über ein Getriebe angetrieben wird,
wobei die rotierende elektrische Maschine (1) eine rotierende elektrische Maschine (1) nach Anspruch 1 ist.

## Revendications

1. Machine électrique rotative (1) comprenant :
un stator (10) ; et
un rotor (30) ayant un noyau de rotor (40) faisant face au stator (10),
dans laquelle le noyau de rotor (40) a au moins un trou d'insertion d'aimant (50) par pôle magnétique, et inclut un noyau d'axe d (41) disposé sur un côté circonférentiel extérieur du trou d'insertion d'aimant (50), un noyau côté circonférentiel intérieur (110) disposé sur un côté circonférentiel intérieur du trou d'insertion d'aimant (50), et un noyau d'axe q (46) circonférentiellement adjacent au noyau d'axe d (41),
un aimant permanent (70) est inséré dans le trou d'insertion dément (50), le noyau d'axe d (41) est couplé au noyau côté circonférentiel
intérieur (110) par une première portion en pont (61) adjacente à l'une des deux extrémités du trou d'insertion d'aimant (50) et une seconde portion en pont (62) adjacente à l'autre des deux extrémités,
une distance L1 entre une extrémité du noyau d'axe d (41) sur le côté de la première portion en pont et un centre de pôle magnétique (C) est supérieure à une distance L2 entre une portion de connexion (81) entre la première portion en pont (61) et le noyau d'axe d (41) et le centre de pôle magnétique (C),
une distance L3 entre une extrémité du noyau d'axe d (41) sur le côté de la seconde portion en pont et le centre de pôle magnétique (C) est supérieure à une distance L4 entre une portion de connexion (82) entre la seconde portion en pont (62) et le noyau d'axe d (41) et le centre de pôle magnétique (C), et
le noyau de rotor (40) est divisé en une pluralité de portions, chaque portion ayant une taille d'un pas uni-polaire, une différence entre les distances L1 et L2 de deux noyaux d'axe d (41) adjacents l'un à l'autre étant différente, et une différence entre les distances L3 et L4 de deux noyaux d'axe d (41) adjacents l'un à l'autre étant différente de telle sorte que les noyaux d'axe d (41) de portions adjacentes ont une forme de section transversale différente.

2. Machine électrique rotative (1) selon la revendication 1,
dans laquelle les portions adjacentes ayant des formes de section transversale différentes des noyaux d'axe d (41) sont situées dans une direction circonférentielle ou une direction d'axe de rotation (X) du rotor (30), ou à la fois dans la direction circonférentielle et la direction d'axe de rotation (X).

3. Machine électrique rotative (1) selon la revendication 1,
dans laquelle le noyau d'axe d (41) a des portions en projection qui se projettent circonférentiellement depuis la portion de connexion (81) de la première portion en pont (61) et du noyau d'axe d (41) et la portion de connexion (82) de la seconde portion en pont (62) et du noyau d'axe d (41).

4. Machine électrique rotative (1) selon la revendication 1,
dans laquelle une différence entre une valeur maximum une valeur minimum d'un angle d'ouverture circonférentielle τd depuis l'extrémité du noyau d'axe d (41) sur le côté du premier pont et l'extrémité sur le côté du second pont dans la pluralité de types de formes de section transversale est inférieure à un angle de pas de fente τs du stator (10).

5. Machine électrique rotative (1) selon la revendication 1,
dans laquelle une rainure (120) est située entre le noyau d'axe d (41) et le noyau d'axe q (46).

6. Machine électrique rotative (1) selon la revendication 5,
dans laquelle la rainure (120) est sensiblement en forme de V.

7. Machine électrique rotative (1) selon la revendication 1,
dans laquelle l'une quelconque des distances L1, L2, L3, L4, d'une distance L5 entre l'extrémité du noyau d'axe d (41) sur le côté de la première portion en pont et une condition radialement la plus à l'extérieur du noyau d'axe q, d'une distance L6 entre l'extrémité du noyau d'axe d (41) sur le côté de la seconde portion en pont et la condition radialement la plus à l'extérieur du noyau d'axe q, d'une distance L7 de la condition radialement la plus à l'extérieur du noyau d'axe q (46) sur le côté de la première portion en pont depuis un axe de rotation, d'une distance L8 de la condition radialement la plus à l'extérieur du noyau d'axe q (46) sur le côté de la seconde portion en pont depuis l'axe de rotation, et d'une distance L9 entre la surface circonférentielle extérieure du noyau d'axe d (41) et une surface circonférentielle extérieure de l'aimant permanent (70) sur le centre de pôle magnétique, est différente dans la pluralité de types de formes de section transversale.

8. Machine électrique rotative (1) selon la revendication 7,
dans laquelle l'une quelconque des distances L1 à L4 est différente dans la pluralité de types de formes de section transversale.

9. Machine électrique rotative (1) selon la revendication 7,
dans laquelle l'une quelconque des distances L5 à L8 est différente dans la pluralité de types de formes de section transversale.

10. Machine électrique rotative (1) selon la revendication 7,
dans laquelle la distance L9 est différente dans la pluralité de types de formes de section transversale.

11. Machine électrique rotative (1) selon la revendication 5, comprenant en outre une portion en pont qui couple le noyau d'axe d (41) au noyau d'axe q (46) et qui ferme une ouverture de la rainure (120).

12. Système d'entraînement de machine électrique rotative comprenant :
une machine électrique rotative (1) qui entraîne une charge ; et
un convertisseur de puissance qui entraîne la machine électrique rotative (1),
dans lequel la machine électrique rotative (1) est la machine électrique rotative (1) selon la revendication 1.

13. Automobile électrique comprenant :
une machine électrique rotative (1) ;
une batterie ; et
un convertisseur de puissance qui convertit une puissance CC de la batterie en puissance CA, et qui alimente la puissance CA à la machine électrique rotative (1), dans lequel un couple de la machine électrique rotative (1) est transmis à une roue par l'intermédiaire d'une transmission, dans lequel la machine électrique rotative (1) est la machine électrique rotative (1) selon la revendication 1.

14. Véhicule ferroviaire électrique incluant un train de roulement comprenant :
une machine électrique rotative (1) ; et
une roue entraînée par la machine électrique rotative (1) par l'intermédiaire d'un engrenage,
dans lequel la machine électrique rotative (1) est une machine électrique rotative (1) selon la revendication 1.
